# EUROPEAN PATENT APPLICATION

(11) **EP 4 631 669 A1**
(43) Date of publication of application: **15.10.2025**
(21) Application number: 24169086.6
(22) Date of filing: 08.04.2024
(51) Int. Cl.: B23K 35/02, B23K 9/20, B23K 20/12, F16B 37/06

(54) **JOINING STUD**

(71) Applicant: Newfrey LLC, New Britain, CT 06053 (US)
(72) Inventor: Pimper, Ralf, 35394 Giessen (DE); Eissara, Bah, 35394 Giessen (DE)
(74) Representative: Witte, Weller & Partner Patentanwälte mbB

(57) **Abstract**

A joining stud (10) for joining to a workpiece (11), comprising an axially extending shaft portion (12) and a head portion (14) connected to the shaft portion (12) at one axial end thereof, wherein the head portion (14) has a joining surface (22) located essentially in a plane transverse to the longitudinal axis (16) of the shaft portion (12), wherein the joining surface (22) comprises a plurality of first protrusions (44) and a plurality of second protrusions (46), wherein the first protrusions (44) each have a first radial dimension (R1) and the second protrusions (46) each have a second radial dimension (R2), and wherein the first radial dimension (R1) is larger than the second radial dimension (R2).

## Description

The present disclosure relates to a joining stud for joining to a workpiece, comprising an axially extending shaft portion and a head portion connected to the shaft portion at one axial end thereof, wherein the head portion has a joining surface located essentially in a plane transverse to the longitudinal axis of the shaft portion, and wherein the joining surface comprises a plurality of protrusions.

Particularly, the present disclosure relates to a welding stud for being welded to a metallic workpiece, particularly to a metal sheet.

Joining studs are typically joined to a surface of a workpiece or component, and in the joined state, project from this surface.

Particularly in the field of manufacturing vehicle bodies, it is known to join joining studs to body portions. It has long been known in this context to join joining studs to a sheet of a vehicle body, particularly in a situation where the metal sheet is accessible from only one side.

While it is known to join such studs to a body portion made of metal or of a plastic material by means of an adhesive, the use of metal joining studs which are welded to a metal portion of a metal body of a vehicle (particularly a white body), is plentiful. For example, such welding studs are joined to a sheet metal and serve as an anchor for a plastic clip, which itself is used to attach another object to the body portion, e.g. an electric cable, a fluid line like a brake fluid line, etc.

In another example, such a joining stud is used as a grounding bolt to which a cable lug is electrically connected. In this case, a shaft of the welding stud typically has an external thread, and the cable lug is slipped onto the shaft and is secured thereon by means of a nut.

In recent years, there has been a trend to reduce the weight of vehicles by using thinner body panels. Since a stud welding process includes drawing an electric arc between the joining surface of the welding stud and the sheet metal to melt the joining surface and an upper surface portion of the sheet metal, it becomes increasingly difficult to avoid welding through the body sheet, thereby destroying the body sheet and the welding joint.

In many cases, the joining surface is a flat radial surface. In other cases, the joining surface is a tapered or conical surface having a central welding tip for contacting the workpiece prior to drawing an electric arc.

Other known welding studs include a joining surface having protrusions. Examples of such welding studs are known from documents JP 49-26160 A, DE 102 30 846 A1, US 7,452,171 B2, EP 3 928 909 A1, WO 2015/082177 A1, and FR 2149765 A.

Against this background, it is the object of the invention to provide an improved joining stud.

The above object is achieved, according to a first aspect, by a joining stud for joining to or being joined to a workpiece, comprising an axially extending shaft portion and a head portion connected to the shaft portion at one axial end thereof, wherein the head portion has a joining surface located essentially in a plane transverse to the longitudinal axis of the shaft portion, wherein the joining surface comprises a plurality of first protrusions and a plurality of second protrusions, and wherein the first protrusions each have a first radial dimension and the second protrusions each have a second radial dimension, the first radial dimension being larger than the second radial dimension.

The protrusions each are axial protrusions which extend in the axial direction away from a base surface of the joining surface.

By providing first and second protrusions having different radial dimensions, it is possible to arrange a relatively high number of protrusions on the joining surface, which each have a certain radial length or dimension. This allows to increase the effective welding surface area.

In a particularly preferred embodiment, the first protrusions and the second protrusions are arranged alternately in the circumferential direction. In this case, it is preferred if two adjacent first protrusions have radial inner portions which are arranged at a circumferential distance from each other which is smaller than a circumferential width of the second protrusions at a radial inner portion thereof.

In other words, it is possible to arrange a number of protrusions in a relatively dense manner on the joining surface, so as to allow to spread the joining (welding) energy evenly or uniformly across the joining surface. This can help to avoid creating local energy peaks which can result in local welding portions that fully penetrate the workpiece like a thin sheet metal.

Therefore, it is possible to use the joining stud for joining to a workpiece, even if the workpiece has a relatively small thickness.

The workpiece is preferably made of aluminum. The joining stud itself is also preferably made of aluminum.

Therefore, the object is achieved in full.

According to a second aspect of the present disclosure, there is provided a joining stud for joining to a workpiece, comprising an axially extending shaft portion and a head portion connected to the shaft portion at one axial end thereof, wherein the head portion has a joining surface located essentially in a plane transverse to the longitudinal axis of the shaft portion, wherein the joining surface comprises a plurality of first protrusions and a plurality of second protrusions, and wherein the joining surface comprises a central tip portion extending in the axial direction away from a base surface of the joining surface, wherein the first and second protrusions are arranged at an interval from the outer periphery of the tip portion.

The second aspect of the present disclosure may be combined with the first aspect of the present disclosure.

While it would be possible connect the first and/or second protrusions to the outer periphery of the central tip portion, the present embodiment has the advantage that manufacturing of the joining stud is facilitated.

In the second aspect, the first and second protrusions are preferably arranged at a specific sequence around the circumference of the joining surface, particularly in an alternating arrangement.

In the second aspect, the joining stud is particularly suitable for drawn-arc stud welding. In drawn-arc stud welding, the stud is typically arranged on the workpiece such that the central tip portion contacts the workpiece. In a next step, a so-called pilot arc electric current is made to flow between the welding stud and the workpiece. In a next step, the welding stud is lifted from the workpiece so as to draw an electric pilot arc. Thereafter, the electric current is increased significantly so as to create a welding arc which allows to melt the opposing surfaces of the welding stud and the workpiece (joining surface and opposite workpiece surface). In a final step, the welding stud is moved again downwardly onto the workpiece, typically beyond the original surface plane of the workpiece. Thereby, the welding arc is short-circuited and switched off, and the molten materials of the welding stud and the workpiece solidify after having been mixed, so as to create a joint between the welding stud and the workpiece, which has metallic continuity.

In a preferred embodiment of the second aspect of the joining stud, the central tip portion extends in the axial direction away from the base surface of the joining surface by an axial dimension which is larger than that of the first and second protrusions.

The axial dimension by which the central tip portion protrudes beyond the first and second protrusions in the axial direction away from the base surface is typically less than 0.25 mm, particularly smaller than 0.15 mm, and is preferably larger than 0 mm.

According to a third aspect of the present disclosure, there is provided a joining stud for joining to a workpiece, comprising an axially extending shaft portion and a head portion connected to the shaft portion at one axial end thereof, wherein the head portion has a joining surface located essentially in a plane transverse to the longitudinal axis of the shaft portion, wherein the joining surface comprises a plurality of first protrusions and a plurality of second protrusions, and wherein at least one of the first protrusions and second protrusions has a cross section which, when viewed in the radial direction, includes a distal semi-circular cross-sectional portion and a proximal transitional cross-sectional portion connected to a base surface of the joining surface.

In other words, at least one of the protrusions, preferably each of the protrusions, has a shape when viewed in the radial direction, which has an upper (distal from a base surface of the joining surface) dome-shaped semi-circular portion, and a transitional portion by which the semi-circular portion is lifted above the base surface of the joining surface.

The joining stud of the third aspect may be combined with the joining stud of the first aspect, with the joining stud of the second aspect, or with both.

The transitional cross-sectional portion may have a rectangular and/or an arcuate shape on its circumferential opposite ends.

In a plan view (when viewed in the axial direction), each of the first and second protrusions may have an arcuate or bent shape. In a preferred embodiment, however, each of the first and second protrusions is a straight portion. It is particularly preferred, if each of the first and second protrusions is, when viewed in the axial direction, a straight portion which extends radially from a central portion of the joining surface (which corresponds to the longitudinal axis of the joining stud) to a radial outer end (circumference) of the joining surface.

In other words, at least some of the first projections and/or at least some of the second projections extend radially when viewed in the axial direction.

In each case, it is preferred if the first and/or second projections have a radial dimension which is larger than their respective circumferential dimension, when viewed in the axial direction.

Further, it is preferred if none of the first and second projections extends up to an outer periphery of the tip portion.

On the other hand, it is preferred if at least some of the first projections and/or at least some of the second projections extend radially to an outer peripheral surface of the joining portion.

In other words, it is preferred if the first projections and/or the second projections have radial outer surfaces which are flush with an outer peripheral surface of the joining portion.

In another preferred embodiment of the joining stud of the present disclosure, the head portion comprises a flange portion and a joining portion, wherein the flange portion is arranged between the shaft portion and the joining portion in the axial direction, and wherein the flange portion has an outer diameter larger than the outer diameter of the shaft portion.

In this case, it is preferred if the shaft portion extends from the flange portion. Further, it is preferred if the flange portion has an irregular (non-circular) peripheral portion for engagement by a tool (e.g. a wrench). Also, it is preferred if the outer diameter of the flange portion is larger than an outer diameter of the joining portion.

In addition, it is preferred if an upper surface of the flange portion, which faces away from the joining portion, is a flat portion which can be used as an electrical contact portion for establishing a contact to a cable lug or the like.

The base surface of the joining surface is preferably a radial surface from which the protrusions and, optionally, the tip portion extend in the axial direction.

Further, it is preferred if an upper ridge of at least one of the first protrusions and the second protrusions is inclined with respect to a radial plane, preferably with respect to the base surface.

In general, it is possible to provide the inclined protrusion such that a radial outer end thereof is lower than a radial inner portion thereof.

In other cases, the protrusions may each have a constant thickness or axial length so that they are not inclined.

However, it is preferred if the at least one protrusion is inclined such that a radial outer portion is higher (in the axial direction) than a radial inner portion thereof, so that upper ridges of the protrusions are sloped downwardly from the outer periphery to a radial inner portion thereof.

In other words, it is preferred if a ratio of a radial outer protrusion height of the first protrusions to a radial inner protrusion height of the first protrusions is in a range from 1.0 to 2.0, preferably in a range from 1.25 to 1.75.

The second protrusions are preferably inclined by the same amount or with the same angle as the first protrusions.

In another preferred embodiment, a ratio of a radial outer protrusion height of the first protrusions to a joining portion outer diameter is in a range from 0.05 to 0.2, preferably in a range from 0.08 to 0.15.

In another preferred embodiment, a ratio of a radial length of the first protrusions to a radial length of the second protrusions is in a range from 1.0 to 4.5, preferably in a range from 1.5 to 2.0.

In other words, the first and second protrusions may have an identical radial length.

It is however preferred if the radial length of the first protrusions is larger than the radial length of the second protrusions.

Therefore, the ratio of the radial length of the first protrusions to the radial length of the second protrusions is preferably larger than 1.0 and smaller than 4.5.

Further, it is preferred if a ratio of a circumferential width of each protrusion to a diameter of the joining surface is in a range from 0.02 to 0.4, preferably in a range from 0.05 to 0.3, and particularly preferred in a range from 0.075 to 0.125.

Further, it is preferred if the number of first protrusions is in a range from 4 to 8, preferably in a range from 5 to 7.

Also, it is preferred if the number of second protrusions is in a range from 4 to 8, preferably in a range from 5 to 7.

In a preferred embodiment, the number of the first protrusions and the number of the second protrusions is in each case 6.

Each of the above preferred embodiments contribute to the suitability of the disclosed joining stud for being joined to a rather thin metal sheet, particularly a rather thin aluminum sheet.

A thickness of the sheet may in this case be smaller than 2.5 mm. Preferably, the thickness of the sheet is smaller than 2.0 mm, preferably smaller than 1.8 mm.

In each case, the thickness is preferably larger than 0.5 mm, particularly larger than 0.8 mm.

While the prior art tended to decrease the diameter of joining surfaces for applications where such thin metal sheets are involved, the present disclosure generally teaches to increase the welding surface by providing first and second protrusions. In this case, the diameter of the joining surface can be rather large. Therefore, it is possible to provide joints that have a high strength in circumferential direction (can take up high torques).

It is understood that the features mentioned above and those yet to be explained below can be used not only in the respective combinations indicated, but also in other combinations or in isolation, without leaving the context of the present invention.

Exemplary embodiments of the invention are shown in the drawings and will be described in more detail hereinafter. In the drawings:
Fig. 1 is a side view of a joining stud of a first embodiment and a cross section of a workpiece;
Fig. 2 is a perspective view of a head of the joining stud of Fig. 1;
Fig. 3 is a plan view of the head of the joining stud of Fig. 1;
Fig. 4 is a partial sectional IV-IV in Fig. 3; and
Fig. 5 is a perspective view of a head of a joining stud of a second embodiment.

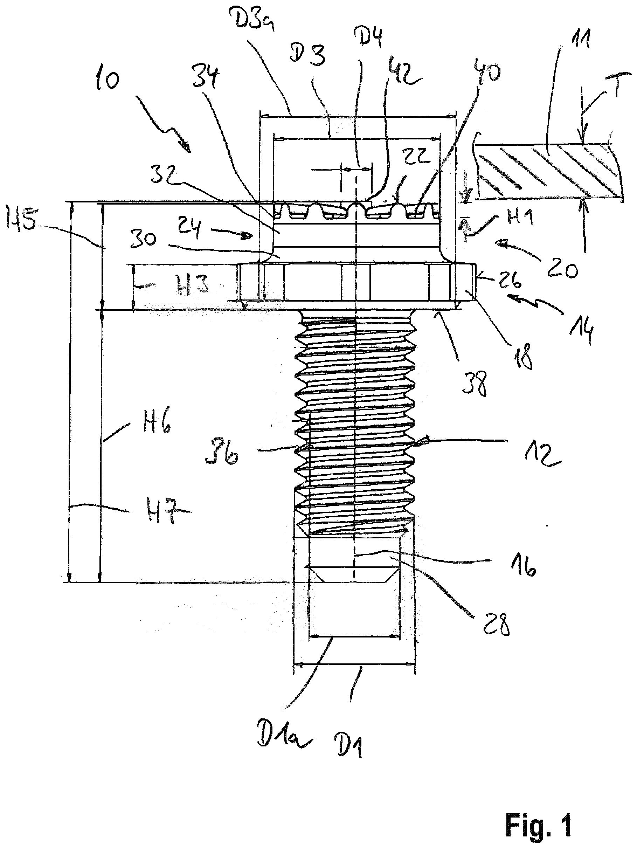

In Figures 1 to 4, a first embodiment of a joining stud is shown and generally designated with 10.

The joining stud 10 is an aluminum stud for aluminum stud welding. Particularly, the joining stud 10 is configured to be welded onto a surface of a workpiece 11 made of aluminum. The thickness T of the workpiece 11 can be small, particularly smaller than 2 mm.

The joining stud 10 includes a shaft portion 12 and a head portion 14. The shaft portion 12 extends in an axial direction along a longitudinal axis 16.

The head portion 14 includes a flange portion 18 and a joining portion 20. The flange portion 18 is arranged between the joining portion 20 and the shaft portion 12 in the axial direction.

The joining portion 20 includes a joining surface 22 which faces away from the shaft portion 12. Further, the joining portion 20 includes an intermediate portion 24 which is arranged between the joining surface 22 and the flange portion 18.

The flange portion 18 has an outer circumference which is non-circular. Presently, the outer circumference of the flange portion 18 includes an outer circumferential surface 26 which is polygonal in an axial view. In the present case, the polygonal shape has eight flat surfaces and a corresponding number of radius portions which connect the flat portions.

The shaft portion 12 has a reduced diameter portion 28 at a free end thereof which is opposite to the axial end of the shaft that is connected to the flange portion 18.

The intermediate portion 24 of the head portion 14 includes an intermediate cylindrical portion 32 which is adjacent to the joining surface 22, and an intermediate fillet portion 30 which is located axially between the intermediate cylindrical portion 32 and the flange portion 18.

The intermediate cylindrical portion 32 has an outer peripheral surface 34.

The shaft portion 12 has an external thread 36, which can be an M8 type thread or a similar thread measured in inches, for example.

The flange portion 18 has a contact surface 38 which faces away from the joining surface 22.

The joining stud 10 may be used as a grounding stud. In this case, a cable lug may be arranged around the shaft portion 12, so as to contact the contact surface 38. The cable lug may be secured to the joining stud by means of a nut threaded onto the external thread 36, so as to provide a good electrical contact between the cable lug and the contact surface 38. Thereby, an electric grounding cable which is connected to the cable lug, can be electrically connected to the workpiece 11 to which the joining stud 10 is welded.

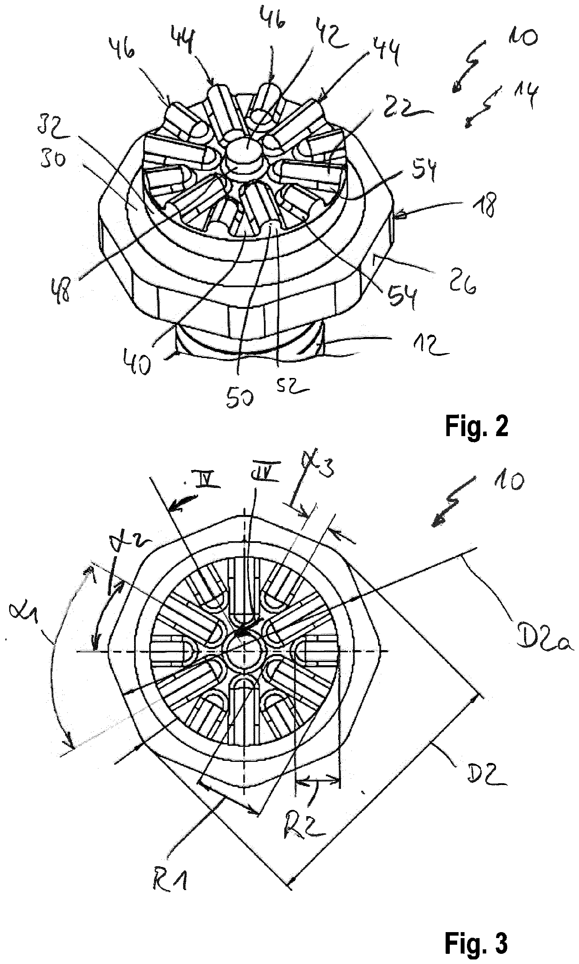

As is shown particularly in Figures 2 and 3, the joining surface 22 of the joining portion 20 includes a base surface 40 which extends essentially in a radial plane which is perpendicular to the longitudinal axis 16.

Further, a central tip portion 42 extends from a center of the base surface 40 in an axial direction away from the flange portion 18.

The joining surface 22 further includes first protrusions 44 and second protrusions 46. An outer periphery of the central tip portion 42 is shown at 48.

The first protrusions 44 each extend as straight protrusions in a radial direction. Similarly, the second protrusions 46 are straight protrusions which extend radially, when viewed in the axial direction.

The first protrusions 44 and the second protrusions 46 are provided alternately in a circumferential direction.

In a cross section, each of the first and second protrusions 44, 46 include a distal semi-circular portion 50 and a proximal transitional portion 52. The proximal transitional portion 52 is connected to the base surface 40 of the joining surface 22. The distal semi-circular portion 50 is provided on top of the proximal transitional portion 52. The proximal transitional portion 52 comprises a fillet portion 54 which extends from the outer circumference of the joining portion 20 along the radial length of the respective protrusion 44, 46, preferably on both circumferential sides of each protrusion 44, 46.

The first and second protrusions 44, 46 are arranged at an interval from the outer periphery 48 of the central tip portion 42. The interval between the outer periphery 48 of the central tip portion 42 and the first protrusions 44 is smaller than an interval from the outer periphery 48 of the central tip portion 42 to the second protrusions 46.

Each of the first protrusions 44 extends radially when viewed in the axial direction. Similarly, each of the second projections extends radially when viewed in the axial direction.

Particularly, at least some of the first protrusions 44 extend radially to an outer peripheral surface 34 of the joining portion. In addition, at least some of the second protrusions 46 extend radially to an outer peripheral surface 34 of the joining portion.

The shaft portion 12 has an outer diameter D1. The reduced diameter portion 28 of the shaft portion 12 has an outer diameter D1a which is smaller than D1.

The flange portion 18 has an outer diameter D2 between opposite radius portions thereof. An outer diameter between opposite flat portions of the flange portion 18 is shown at D2a. D2a is smaller than D2.

The joining portion 20 has an outer diameter D3. The intermediate fillet portion 30 of the intermediate portion 24 of the head portion 14 has an outer diameter D3a. D3a is larger than D3.

The central tip portion 42 has an outer diameter D4 which is smaller than D3. Particularly, D4 is smaller than 0.25 x D3 and larger than 0.

Each of the first and second protrusions 44, 46 has a radial outer protrusion height H1 at an outer radial portion thereof.

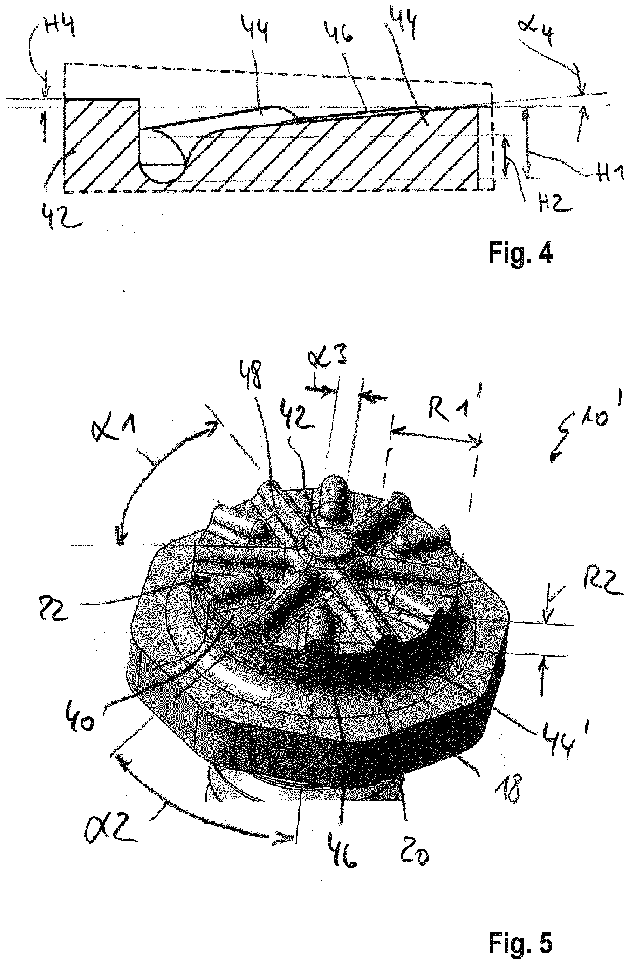

Further, each of the first protrusions 44 has a radial inner protrusion height H2 at a radial inner portion thereof. H2 is either identical to H1, or is, as shown in Fig. 4, smaller than H1.

Further, the flange portion 18 has a height H3 along the axial direction. The tip portion defines a projection height H4 by which the central tip portion 42 projects axially beyond the radial outer protrusion height H1, as shown in Fig. 4.

The head portion 14 has an axial length H5. The shaft portion 12 has an axial length H6. The entire length of the joining stud 10 is shown at H7, wherein H7 = H5 + H6.

Each of the first protrusions 44 has a radial length R1. Each of the second protrusions 46 has a radial length R2. The radial length R1 is larger than the radial length R2.

As is shown in Fig. 3, the radial length R1 is larger than the radial length R2 in such a manner that radial inner portions of two adjacent first protrusions have a distance from each other which is smaller than a circumferential width of a second protrusion which is arranged therebetween.

The number of first protrusions is 6. The number of second protrusions is 6. The first and second protrusions 44, 46 are arranged alternately in the circumferential direction.

An angle between two adjacent first protrusions 44 is shown at α1. α1 is 60 degrees in the first embodiment, for example.

An angle between adjacent first and second protrusions is shown at α2. α2 is 30 degrees in the first embodiment, for example.

Further, a circumferential width (corresponding to a circumferential extension angle) of the first and second protrusions is in each case α3. α3 is smaller than α2.

As is shown in Fig. 4, the first protrusions 44 are each inclined in such a manner that a radial outer portion thereof has a larger height H1 than the height H2 of a radial inner portion thereof. An inclination angle α4 is thus formed between an upper ridge of each of the first protrusions 44 and a radial plane.

In the present case, the first radial dimension (corresponding to the radial length) R1 of the first protrusions is larger than the radial dimension (corresponding to the radial length) R2 of the second protrusions 46.

Further, the first and the second protrusions are each arranged at an interval, or at a non-zero distance, from the outer periphery 48 of the central tip portion 42.

The outer diameter D2 of the flange portion is larger than the outer diameter D1 of the shaft portion, and larger than an outer diameter D3 of the joining portion. The diameter D3 is larger than the outer diameter D1 of the shaft portion.

A ratio of the radial outer protrusion height H1 of the first protrusions 44 to a joining portion outer diameter D3 is in a range from 0.05 to 0.2, preferably in a range from 0.08 to 0.15.

A ratio of a radial outer protrusion height H1 of the first protrusions 44 to a radial inner protrusion height H2 of the first protrusions 44 is preferably in a range from 1 to 2, preferably in a range from 1.1 to 1.9.

A ratio of a radial length R1 of the first protrusions 44 to a radial length R2 of the second protrusions 46 is in a range from 1.0 to 4.5, preferably in a range from 1.5 to 2.0.

A ratio of a circumferential width α3 of each protrusion 44, 46 to a diameter D2 of the joining surface 22 is in a range from 0.025 to 0.4, preferably in a range from 0.05 to 0.3, particularly preferred in a range from 0.075 to 0.125.

The number of first protrusions is preferably in a range from 4 to 8. The number of second protrusions 46 is preferably in a range from 4 to 8.

Fig. 5 shows a second embodiment of a joining stud 10'. The joining stud 10' corresponds with respect to form and function to the joining stud 10 of Figures 1 to 4. In the following, essentially only differences will be briefly explained.

The joining stud 10' includes first protrusions 44' which are not arranged at an interval from an outer periphery 48 of the central tip portion, but are connected integrally to the outer periphery 48 of the central tip portion 42.

Further, the inclination angle α4 (not shown in Fig. 5) is chosen such that a radial outer portion of the first protrusions 44' has a smaller height than a radial inner portion thereof.

Otherwise, the joining stud 10' is identical to the joining stud 10 of Fig-ures 1 to 4.

The joining studs 10, 10' of the above embodiments are suitable for being welded to thin aluminum sheets having thicknesses T of less than 2.0 mm, preferably less than 1.75 mm.

On the other hand, the outer thread 36 of the shaft portion 12 may have an M8 type thread.

With the specific joining surface 22 of the joining studs 10, 10', joints between the respective joining studs 10, 10' and the workpiece 11 may be achieved that have a high strength against torsional loads.

The joining studs 10, 10' are preferably used in drawn-arc stud welding processes as are generally known in the art and as are described in the introductory portion of this specification.

### REFERENCE NUMERALS:

- 10: joining stud
- 11: workpiece
- 12: shaft portion
- 14: head portion
- 16: longitudinal axis
- 18: flange portion
- 20: joining portion
- 22: joining surface
- 24: intermediate portion
- 26: outer circumferential surface 18
- 28: reduced diameter portion 12
- 30: intermediate fillet portion 24
- 32: intermediate cylindrical portion 24
- 34: outer peripheral surface 20
- 36: outer thread 12
- 38: contact surface 18
- 40: base surface 22
- 42: central tip portion 22
- 44: first protrusions 22
- 46: second protrusions 22
- 48: outer periphery 42
- 50: distal semi-circular portion
- 52: proximal transitional portion
- 54: protrusion fillet portion

- D1: shaft portion outer diameter
- D1a: diameter of reduced diameter portion
- D2: flange portion outer diameter
- D2a: outer diameter of flat portion of flange portion
- D3: joining portion outer diameter
- D3a: intermediate fillet portion outer diameter
- D4: central tip portion outer diameter
- H1: radial outer protrusion height
- H2: radial inner protrusion height
- H3: flange portion height
- H4: tip portion projection height
- H5: head portion length
- H6: shaft portion length
- H7: stud length
- R1: radial length first protrusions 44
- R2: radial length second protrusions 46
- α1: angle between two adjacent first protrusions
- α2: angle between adjacent first and second protrusions
- α3: circumferential width (circumferential extension angle) of first and second protrusions
- α4: protrusion inclination angle
- T: workpiece thickness

## Claims

1. A joining stud (10, 10') for joining to a workpiece (11), comprising an axially extending shaft portion (12) and a head portion (14) connected to the shaft portion (12) at one axial end thereof,
wherein the head portion (14) has a joining surface (22) located essentially in a plane transverse to the longitudinal axis (16) of the shaft portion (12),
wherein the joining surface (22) comprises a plurality of first protrusions (44, 44') and a plurality of second protrusions (46),
**characterized in that**
the first protrusions (44, 44') each have a first radial dimension (R1) and the second protrusions (46) each have a second radial dimension (R2), the first radial dimension (R1) being larger than the second radial dimension (R2).

2. The joining stud of claim 1 or of the preamble of claim 1,
**characterized in that**
the joining surface (22) comprises a central tip portion (42) extending in the axial direction away from a base surface (40) of the joining surface (22), wherein the first protrusions (44, 44') and/or the second protrusions (46) are arranged at an interval from the outer periphery (48) of the tip portion (42).

3. The joining stud of claim 2, **characterized in that** the central tip portion (42) extends in the axial direction away from the base surface (40) of the joining surface (22) by an axial dimension larger than that of the first and second protrusions (44,46).

4. The joining stud of any one of claims 1 to 3 or of the preamble of claim 1, **characterized in that**
at least one of the first protrusions (44, 44') and second protrusions (46) has a cross-section which, when viewed in the radial direction, includes a distal semi-circular portion (50) and a proximal transitional portion (52) connected to a base surface (40) of the joining surface (22).

5. The joining stud of claim 4, **characterized in that** the proximal transitional portion (52) comprises a fillet portion (54).

6. The joining stud of any one of claims 1 to 5, **characterized in that**
- at least some of the first projections (44, 44') extend radially when viewed in the axial direction, and/or
- at least some of the second projections (46) extend radially when viewed in the axial direction.

7. The joining stud of any one of claims 1 to 6, **characterized in that**
- at least some of the first projections (44, 44') extend radially to an outer peripheral surface (34) of the joining portion (20), and/or
- at least some of the second projections (46) extend radially to an outer peripheral surface (34) of the joining portion (20).

8. The joining stud of any one of claims 1 to 7, **characterized in that** the head portion (14) comprises a flange portion (18) and a joining portion (20), wherein the flange portion (18) is arranged between the shaft portion (12) and the joining portion (20) in the axial direction, wherein the flange portion (18) has an outer diameter (D2) larger than the outer diameter (D1) of the shaft portion (12).

9. The joining stud of any one of claims 1 to 8, **characterized in that** an upper ridge of at least one of the first protrusions (44, 44') and second protrusions (46) is inclined by a protrusion inclination angle (α4) with respect to a radial plane.

10. The joining stud of any one of claims 1 to 9, **characterized in that**
- a ratio of a radial outer protrusion height (H1) of the first protrusions (44) to a joining portion outer diameter (D3) is in a range from 0.05 to 0.2, preferably in a range from 0.08 to 0.15; and/or
- a ratio of a radial outer protrusion height (H1) of the first protrusions (44) to a radial inner protrusion height (H2) of the first protrusions (44) is in a range from 1.0 to 2.0; and/or
- a ratio of a radial length (R1) of the first protrusions (44) to a radial length (R2) of the second protrusions (46) is in a range from 1.0 to 4.5, preferably in a range from 1.5 to 2.0; and/or
- a ratio of a circumferential width (α3) of each protrusion (44,46) to a diameter (D3) of the joining surface (22) is in a range from 0.025 to 0.3, preferably in a range from 0.05 to 0.3, particularly preferred in a range from 0.075 to 0.125; and/or
- the number of first protrusions (44) is in a range from 4 to 8; and/or
- the number of second protrusions (46) is in a range from 4 to 8.
